# EUROPÄISCHE PATENTSCHRIFT

(11) **EP 1 830 938 B1**
(45) Veröffentlichungstag und Bekanntmachung des Hinweises auf die Patenterteilung: **24.10.2018**
(21) Anmeldenummer: 05848993.1
(22) Anmeldetag: 21.12.2005
(51) Int. Cl.: B01D 3/32

(54) **BODENKOLONNE UND VERFAHREN ZUM STOFFAUSTAUSCH IN EINER BODENKOLONNE**
PLATE COLUMN AND METHOD FOR THE TRANSFER OF MATERIAL IN A PLATE COLUMN
COLONNE A PLATEAUX, ET PROCEDE DE TRANSFERT DE MATIERE DANS UNE COLONNE A PLATEAUX

(30) Priorität: 22.12.2004 DE 102004061773
(43) Veröffentlichungstag der Anmeldung: 12.09.2007
(73) Patentinhaber: BASF SE, 67056 Ludwigshafen am Rhein (DE)
(72) Erfinder: DIEFENBACHER, Armin, 76726 Germersheim (DE); HAMMON, Ulrich, 68163 Mannheim (DE); WALTER, Thomas, 67454 Hassloch (DE); SEIDER, Bruno, 68753 Waghäusel (DE); SCHNEIDER, Wolfgang, 67098 Bad Dürkheim (DE); GERBER, Bernd, 67069 Ludwigshafen (DE); SCHLIEPHAKE, Volker, 67105 Schifferstadt (DE); BLECHSCHMITT, Michael, 67105 Schifferstadt (DE)
(74) Vertreter: BASF IP Association
(86) Internationale Anmeldenummer: PCT/EP2005/013773
(87) Internationale Veröffentlichungsnummer: WO 2006/069693

(56) Entgegenhaltungen:
- EP-A- 0 856 343
- EP-A- 1 500 418
- DE-A1- 19 530 291
- GB-A- 606 870
- US-A- 2 341 091
- US-A- 2 619 337
- US-A- 2 931 469
- US-A- 4 976 823

## Beschreibung

Die Erfindung betrifft eine Bodenkolonne sowie ein Verfahren zum Stoffaustausch in einer Bodenkolonne.

Bodenkolonnen werden für eine Vielzahl von Stoffaustauschprozessen zwischen Flüssigkeiten und Gasen verwendet. Dabei wird eine Flüssigkeit von oben nach unten zu einer Gasphase im Gegenstrom geführt. Das durch Öffnungen in den Kolonnenböden durchströmende Gas wird dabei in die Flüssigkeit eingespeist, so dass ein intensiver Stoffaustausch stattfindet. Die Flüssigkeit wird entweder durch spezielle Ableitvorrichtungen, insbesondere Bodenschächte (bei Querstromböden) oder über Öffnungen in den Kolonnenböden (bei Dualflowböden) auf den jeweils darunter liegenden Kolonnenboden weitergeleitet.

Es gibt eine Vielzahl unterschiedlicher Bodentypen, beispielsweise Siebböden, Dualflowböden, Glockenböden oder Ventilböden.

Bei Bodenkolonnen mit größeren Durchmessern sind die Böden in der Regel nicht einstückig, sondern aus mehreren Kolonnenbodensegmenten (Bodenplatten) zusammengesetzt.

Um die mechanische Stabilität zu gewährleisten, insbesondere bei der hohen Belastung durch die Flüssigkeit im Betrieb, werden die Kolonnenböden beziehungsweise Kolonnenbodensegmente durch Träger gestützt, die horizontal, an der Unterseite der Kolonnenböden, angeordnet sind. Die Träger sind häufig T-förmig ausgebildet.

Am Kolonneninnenmantel ist in der Regel ein Auflagering für die Kolonnenböden vorgesehen. Die auf den Trägern befestigten Kolonnenbodensegmente können über Klammern oder Klemmleisten miteinander verbunden, insbesondere verschraubt sein. Der Auflagering ist im Allgemeinen mit dem Kolonnenmantel verschweißt.

Bei allen genannten Konstruktionen entstehen keine oder nur sehr feine Durchlässe, insbesondere Kapillarspalte (Haarspalte), an den Verbindungslinien von Bodenplatten miteinander oder mit Stützelementen (Trägern) oder an Schraubverbindungen der Bodenteile. In derartigen feinen Durchlässen ist die Verweilzeit der Flüssigkeit um ein Vielfaches höher als die durchschnittliche Verweilzeit auf dem Kolonnenboden. Dies führt bei bestimmten Stoffen zu Polymerisation, Koagulation, Verbackung oder sonstigen unerwünschten physikalischen oder chemischen Stoffveränderungen. Häufig sind die Haarspalte nur der Startpunkt für derartige Reaktionen, die sich dann auf dem Kolonnenboden fortsetzen.

Bei zur Verschmutzung oder Polymerisation neigenden Produkten, beispielsweise Acrylsäure, werden meist Bodenkolonnen, bevorzugt Kolonnen mit Siebböden oder Dualflowböden (Regensiebböden) eingesetzt.

In Verfahren, bei denen zur Polymerisation neigende Produkte in solchen Bodenkolonnen eingesetzt werden, ist es bekannt, die Betriebsbedingungen so einzustellen, dass eine möglichst gleichmäßige, nicht zu große Verweilzeit der Flüssigphase auf den einzelnen Böden erreicht wird. Des Weiteren wird es für die Reduzierung der Verschmutzungsneigung die Polymerisation als günstig erachtet, gänzlich oder teilweise nicht mit stabilisatorhaltiger Flüssigkeit benetzte Stellen zu vermeiden.

Um die Verschmutzungsproblematik zu reduzieren, wurde daher in DE-A 195 30 291 ein Kolonnenboden vorgeschlagen, wobei die Mehrzahl, vorzugsweise die Gesamtzahl der Stützelemente miteinander und mit der Kolonnenwand beziehungsweise dem Auflagering, insbesondere in diskreten Flächenelementen, flüssigkeitsdicht verbunden, vorzugsweise verschweißt sind und im Übrigen die Mehrzahl, vorzugsweise die Gesamtzahl der benachbarten Bodenplatten und Stützelemente voneinander und von der Kolonnenwand beziehungsweise dem Auflagering durch Spalte mit einer Breite von 1 mm bis 15 mm, vorzugsweise von 1 mm bis 7 mm, getrennt sind.

Somit wird einer Bildung von unerwünschten Spalten dadurch entgegengewirkt, dass einerseits die Spalte groß genug gemacht werden, um die beschriebenen nachteiligen Reaktionen zu vermeiden, und andererseits die Abdichtung kleiner Flächen so gut erfolgt, dass Spaltbildung mit vertretbarem technischen Aufwand vermieden werden kann. Besonders vorteilhaft ist dabei die Herstellung kleinflächiger Schweißverbindungen zwischen den zu verbindenden Bauteilen, da dadurch in vorteilhafter Weise eine flüssigkeitsdichte Verbindung geschaffen werden kann.

In EP-B 0 856 343 ist eine weitere Lösung für die Verschmutzungsproblematik in Bodenkolonnen vorgeschlagen, wonach in einem Stützelement für einen Kolonnenboden, insbesondere dem Auflagering, Öffnungen vorgesehen sind, durch die die Flüssigkeit ablaufen kann.

Es war demgegenüber Aufgabe der Erfindung, eine weitere Verbesserung von Kolonnenböden zur Verfügung zu stellen, wobei durch einfache konstruktive Maßnahmen eine weitere Reduzierung der Polymerisationsproblematik erreicht wird.

Entsprechend wurde eine Bodenkolonne mit Kolonnenböden, die Kolonnenböden stützende an der Unterseite derselben angeordnete, zwei oder mehrere Trägern und einem Auflagering für die Kolonnenböden am Innenmantel der Bodenkolonne gefunden, die dadurch gekennzeichnet ist, dass Dreier-Stöße zwischen Kolonneninnenmantel, Auflagering und Träger durch Aussparungen im Auflagering vermieden werden.

Zusätzlich sind im Auflagering, bevorzugt an den Stellen, an denen die Träger an den Auflagering anstoßen, Öffnungen vorgesehen, beispielsweise kreisförmige Bohrungen.

Die Erfinder haben die Stoßstellen zwischen Träger, Kolonnenmantel und Auflagering als besonders kritische Startpunkte für chemische oder physikalische Stoffveränderungen, die zur Verschmutzung führen, erkannt.

Indem der Auflagering entsprechend ausgespart wird, werden Dreier-Stöße zwischen Kolonneninnenmantel, Auflagering und Träger vermieden. Die Geometrie der Aussparungen ist hierbei nicht entscheidend, wesentlich ist die Funktion, und zwar dass das Abfließen von Flüssigkeit durch die Aussparung gewährleistet ist, ohne dass hierbei die Trägerfunktion des Auflagerings wesentlich beeinträchtigt ist. Hierfür ist in der Regel eine Breite der Aussparung > 1 mm, häufig > 3 mm, bevorzugt > 5 mm geeignet.

Die Aussparungen können bevorzugt in rechteckiger Form ausgebildet sein.

Häufig werden T-förmige Träger mit einem horizontalen und einem vertikalen Teil eingesetzt. In diesem Fall muss im Bereich der Aussparungen im Auflagering auch der horizontale Teil der Träger entsprechend ausgespart sein.

Bevorzugt können die Aussparungen im horizontalen Teil des Trägers über die gesamte Breite des Auflagerings vorgesehen sein.

Es ist jedoch auch möglich, dass der horizontale Teil des T-förmigen Trägers nicht über die gesamte Breite des Auflagerings ausgespart ist. In diesem Fall muss der horizontale Teil des T-förmigen Trägers mit dem Auflagering entweder flüssigkeitsdicht verbunden, insbesondere verschweißt sein wobei die Schweißnaht bevorzugt glatt geschliffen wird, oder um einen Spalt beabstandet sein, der so weit ist, dass Flüssigkeit ungehindert ablaufen kann. Geeignet sind hierfür die gleichen Spaltweiten, die oben zu den Aussparungen im Auflagering angegeben sind.

Gegenstand der Erfindung ist auch ein Verfahren zum Stoffaustausch in einer Bodenkolonne mit Kolonnenböden, die Kolonnenböden stützende, an der Unterseite derselben angeordnete zwei oder mehrere Träger und einem Auflagering für die Kolonnenböden am Innenmantel der Bodenkolonne, das dadurch gekennzeichnet ist, dass Dreier-Stöße zwischen Kolonneninnenmantel, Auflagering und Träger durch Aussparungen im Auflagering vermieden werden. Hierbei kann es sich insbesondere um eine Destillation, Strippung oder Absorption handeln.

Besonders geeignet ist die Verwendung in Verfahren, in denen (Meth)acrylsäure und/oder deren Ester behandelt werden.

Die Erfindung wird im Folgenden anhand einer Figur näher erläutert.

Es zeigen im Einzelnen:
- Figur 1: einen Ausschnitt aus einer Ausführungsform für eine erfindungsgemäße Bodenkolonne in horizontaler Ebene,
- Figur 2: einen Ausschnitt in vertikaler Ebene durch einen T-Träger und
- Figur 3: einen weiteren Ausschnitt durch einen T-Träger in einer vertikalen Ebene, die um 90° gegenüber der in Figur 2 dargestellten Ebene gedreht ist.

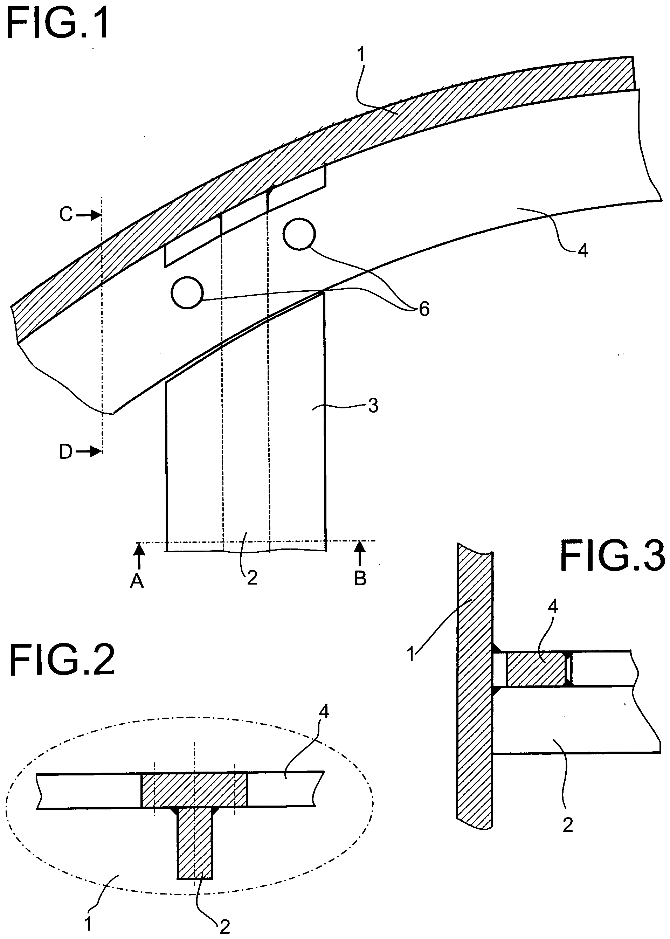

Figur 1 zeigt einen horizontalen Ausschnitt aus einer Bodenkolonne mit Innenmantel 1, T-Trägern mit vertikalem Teil 2 und horizontalem Teil 3 und Auflagering 4, wobei im Auflagering 4 im Bereich der Stoßstelle des Trägers 2, 3 an den Innenmantel 1 eine Aussparung 5 vorgesehen ist. In der in der Figur dargestellten bevorzugten Ausführungsform sind zusätzlich in dem Bereich, in dem der T-Träger 2, 3 an den Auflagering 4 anstößt, Öffnungen 6 vorgesehen.

Der Vertikalschnitt in Figur 2 verdeutlicht, dass der Träger im Bereich des Trägerrings 4 ausschließlich aus dem vertikalen Teil 2 besteht.

Auch Figur 3, die einen weiteren vertikalen Schnitt in eine Schnittebene, die um 90° gegenüber Figur 2 gedreht ist, zeigt, dass der horizontale Teil 3 des Trägers ausgespart ist, d.h. im Bereich, in dem Innenmantel 1, Auflagering 4 und Träger anstoßen, derselbe ausschließlich aus dem vertikalen Teil 2 gebildet ist.

## Patentansprüche

1. Bodenkolonne mit
- Kolonnenböden,
- die Kolonnenböden stützende, an der Unterseite derselben angeordnete, zwei oder mehreren Trägern und
- einem Auflagering für die Kolonnenböden am Innenmantel der Bodenkolonne, **dadurch gekennzeichnet, dass** 3er-Stöße zwischen Kolonneninnenmantel, Auflagering und Träger durch Aussparungen im Auflagering vermieden werden,
wobei im Auflagering Öffnungen vorgesehen sind.

2. Bodenkolonne nach Anspruch 1, **dadurch gekennzeichnet, dass** die Träger T-förmig, mit einem horizontalen und einem vertikalen Teil ausgebildet sind und dass der horizontale Teil derselben im Bereich der Aussparungen im Auflagering ebenfalls ausgespart ist.

3. Bodenkolonne nach Anspruch 2, **dadurch gekennzeichnet, dass** der horizontale Teil der Träger über die gesamte Breite des Auflagerings ausgespart ist.

4. Bodenkolonne nach einem der Ansprüche 1 bis 3, **dadurch gekennzeichnet, dass** im Auflagering an den Stellen, an denen Träger an den Auflagering anstoßen, Öffnungen vorgesehen sind.

5. Bodenkolonne nach einem der Ansprüche 1 bis 4, **dadurch gekennzeichnet, dass** die Aussparungen im Auflagering rechteckig sind.

6. Verfahren zum Stoffaustausch in einer Bodenkolonne mit Kolonnenböden, die Kolonnenböden stützende an der Unterseite derselben angeordnete zwei oder mehreren Trägern und einem Auflagering für die Kolonnenböden am Innenmantel der Bodenkolonne, **dadurch gekennzeichnet, dass** 3er-Stöße zwischen Kolonneninnenmantel, Auflagering und Träger durch Aussparungen im Auflagering vermieden werden.

7. Verfahren nach Anspruch 6, **dadurch gekennzeichnet, dass** das Verfahren eine Destillation, Strippung oder Absorption ist.

8. Verfahren nach Anspruch 6 oder 7, **dadurch gekennzeichnet, dass** im Verfahren (Meth)acrylsäure und/oder deren Ester behandelt werden.

## Claims

1. A tray column comprising
- column trays,
- two or more supports which are arranged on the underside of the column trays and support them and
- a bearing ring for the column trays on the inner wall of the tray column,
wherein 3-way joints between inner column wall, bearing ring and support are prevented by cutouts in the bearing ring,
wherein orifices are provided in the bearing ring.

2. The tray column according to claim 1, wherein the supports are t-shaped and are formed with a horizontal and a vertical part, and the horizontal part thereof is likewise cut out in the region of the cutouts in the bearing ring.

3. The tray column according to claim 2, wherein the horizontal part of the supports is cut out over the entire width of the bearing ring.

4. The tray column according to any of claims 1 to 3, wherein orifices are provided in the bearing ring at the points at which supports adjoin the bearing ring.

5. The tray column according to any of claims 1 to 4, wherein the cutouts in the bearing ring are rectangular.

6. A method for mass transfer in a tray column comprising column trays, two or more supports which are arranged on the underside of the column trays and support them and a bearing ring for the column trays on the inner wall of the tray column, wherein 3-way joints between inner column wall, bearing ring and support are prevented by cutouts in the bearing ring.

7. The method according to claim 6, which is a distillation, stripping or absorption.

8. The method according to claim 6 or 7, wherein (meth)acrylic acid and/or esters thereof are treated therein.

## Revendications

1. Colonne à plateaux, comprenant
- des plateaux de colonne,
- deux ou plus de deux supports supportant les plateaux de colonne et disposés au niveau de leur côté inférieur et
- un anneau d'appui pour les plateaux de colonne au niveau de l'enveloppe intérieure de la colonne à plateaux,
**caractérisée en ce que** des troisièmes chocs entre l'enveloppe intérieure de colonne, l'anneau d'appui et les supports sont évités par des évidements dans l'anneau d'appui, des ouvertures étant prévues dans l'anneau d'appui.

2. Colonne à plateaux selon la revendication 1, **caractérisée en ce que** les supports sont réalisés en forme de T, avec une partie horizontale et une partie verticale, et **en ce que** la partie horizontale de ceux-ci est également évidée dans la région des évidements dans l'anneau d'appui.

3. Colonne à plateaux selon la revendication 2, **caractérisée en ce que** la partie horizontale des supports est évidée sur toute la largeur de l'anneau d'appui.

4. Colonne à plateaux selon l'une quelconque des revendications 1 à 3, **caractérisée en ce que** dans l'anneau d'appui, aux endroits où les supports butent contre l'anneau d'appui, sont prévues des ouvertures.

5. Colonne à plateaux selon l'une quelconque des revendications 1 à 4, **caractérisée en ce que** les évidements dans l'anneau d'appui sont rectangulaires.

6. Procédé d'échange de matières dans une colonne à plateaux avec des plateaux de colonne, deux ou plus de deux supports supportant les plateaux de colonne et disposés au niveau de leur côté inférieur et un anneau d'appui pour les plateaux de colonne au niveau de l'enveloppe intérieure de la colonne à plateaux, **caractérisé en ce que** des troisièmes chocs entre l'enveloppe intérieure de colonne, l'anneau d'appui et les supports sont évités par des évidements dans l'anneau d'appui.

7. Procédé selon la revendication 6, **caractérisé en ce que** le procédé est une distillation, un stripping ou une absorption.

8. Procédé selon la revendication 6 ou 7, **caractérisé en ce que** l'on traite dans le procédé de l'acide (méth)acrylique et/ou ses esters.
